# EUROPÄISCHE PATENTANMELDUNG

(11) **EP 0 557 915 A1**
(43) Veröffentlichungstag der Anmeldung: **01.09.1993**
(21) Anmeldenummer: 93102716.3
(22) Anmeldetag: 20.02.1993
(51) Int. Cl.: G21F 9/30, G21F 9/28, A62D 3/00, B09B 3/00

(54) **Verfahren zur Entsorgung von radioaktiv kontaminiertem Asbest**

(30) Priorität: 28.02.1992 DE 4206313
(71) Anmelder: Solvay Umweltchemie GmbH, D-30173 Hannover (DE); Solvay Fluor und Derivate GmbH, D-30173 Hannover (DE)
(72) Erfinder: Swidersky, Hans-Walter, W-3000 Hannover 1 (DE); Legat, Werner, W-3000 Hannover 51 (DE)
(74) Vertreter: Lauer, Dieter, Dr.

(57) **Zusammenfassung**

Bei Sanierungsmaßnahmen an kerntechnischen Anlagen bzw. an Anlagen, die radioaktiver Strahlung ausgesetzt sind, kann radioaktiv kontaminierter Asbest gefahrloser deponiert werden, wenn man den Asbest vor der Deponierung mit einer Fluor enthaltenden anorganischen Säure, z.B. Flußsäure, oder einem Salz einer solchen Säure zersetzt.

## Beschreibung

Die Erfindung bezieht sich auf ein Verfahren zur Entsorgung von radioaktiv kontaminiertem Asbest.

Bei Sanierungsmaßnahmen an kerntechnischen Anlagen, an Anlagen, die zur Produktion oder Verarbeitung von radioaktiven Materialien oder Gefahrstoffen dienen, sowie an Gebäudeteilen, die in anderer Weise überdurchschnittlicher radioaktiver Strahlung ausgesetzt sind, stellt radioaktiv kontaminierter Asbest eine besondere Gesundheitsgefährdung dar.

Aufgabe der vorliegenden Erfindung ist es, ein einfaches, wirksames und energiesparendes Verfahren zur Entsorgung von radioaktiv kontaminiertem Asbest anzugeben. Diese Aufgabe wird durch das in den Ansprüchen angegebene Verfahren gelöst.

Das erfindungsgemäße Verfahren zur Entsorgung von radioaktiv kontaminiertem Asbest ist dadurch gekennzeichnet, daß man den radioaktiv kontaminierten Asbest mit einer anorganischen Fluor enthaltenden Säure oder einem sauren Alkali- oder Ammoniumsalz einer solchen Säure zersetzt und das Zersetzungsprodukt deponiert.

Bevorzugte Zersetzungsmittel sind Flußsäure, Hexafluorokieselsäure oder Tetrafluoroborsäure, vorzugsweise in wäßriger Lösung. Sauer reagierende Salze von Fluor enthaltenden anorganischen Säure, beispielsweise NH₄HF₂, NaHF₂ oder KHF₂ und ihre wäßrigen Lösungen sind ebenfalls gut geeignete Zersetzungsmittel.

Die Konzentration des Zersetzungsmittels in der wäßrigen Lösung muß so hoch sein, daß die Reaktion anspringt. Bevorzugt setzt man deshalb eine wäßrige Lösung ein, die mindestens 5 Gew.-% des Zersetzungsmittels enthält. Zweckmäßig liegt die Konzentration an Zersetzungsmittel in der wäßrigen Lösung zwischen 5 und 40 Gew.-%, höhere Konzentrationen sind möglich, die Reaktion wird dann aber sehr heftig.

Flußsäure, vorzugsweise in einer Konzentration von 5 bis 40 Gew.-% ist besonders gut geeignet. Die Zersetzung wird vorzugsweise bei Temperaturen zwischen Umgebungstemperatur und 85 °C durchgeführt. Wird eine exotherme Reaktion beobachtet, wie es beispielsweise bei der Anwendung von Flußsäure der Fall ist, ist eine Zuführung externer Wärmeenergie nicht notwendig. Gegebenenfalls kühlt man die Reaktionsmischung.

Besonders bei Verwendung von Flußsäure als Zersetzungsmittel ist die Reaktion sehr schnell beendet. Das entstehende Reaktionsprodukt kann beispielsweise in der Form eines schwach radioaktiven, flüssigen Abfalls, von welchem keine Gefahren durch Asbest mehr ausgehen, entsorgt werden.

Gewünschtenfalls kann man das entstehende schwach radioaktive, flüssige Zersetzungsprodukt auch verfestigen, beispielsweise durch Abdampfen vorhandenen Wassers, das dann zur Bereitung von Flußsäure oder einer anderen verwendeten wäßrigen Lösung eines Zersetzungsmittels eingesetzt werden kann. Der schwach radioaktive, flüssige Abfall kann auch durch Zusatz von Zement oder anderen Verfestigungsmitteln verfestigt werden.

Das erfindungsgemäße Verfahren weist den Vorteil auf, daß man das schwach radioaktive Zersetzungsprodukt in flüssiger Form oder in verfestigter Form entsorgen kann. Durch Asbest bedingte Gefahren gehen von dem Zersetzungsprodukt nicht mehr aus. Außerdem kann man das erfindungsgemäße Verfahren einfach und energiesparend durchführen.

Die folgenden Beispiele sollen die Erfindung weiter erläutern, ohne sie in ihrem Umfang einzuschränken.

### Beispiel 1:

Zersetzung von radioaktiv kontaminiertem Blauasbest mit Flußsäure.
200 g Spritzasbest (Blauasbest) wurden in einem verschließbaren 2-Liter-Kunststoffgefäß aus Polyethylen vorgelegt und angefeuchtet. Dann wurden 1100 g einer 20 Gew.-% HF enthaltenden Flußsäure zugegeben. Innerhalb von 10 Minuten waren die Asbestfasern aufgelöst. Das flüssige, schwach radioaktive Zersetzungsprodukt konnte in flüssiger Form entsorgt werden.

### Beispiel 2:

Zersetzung von Blauasbest mit Flußsäure unter Verfestigung.
In einem 1-Liter-Kunststoffgefäß aus Polyethylen wurden 50 g radioaktiv kontaminierter Asbest mit wenig Wasser angefeuchtet und 300 g einer 20 Gew.-% HF enthaltenden Flußsäure zugegeben. Nach 10 Minuten war der Asbest zersetzt. Das Reaktionsgemisch wurde dann mit 20 Gew.-% Ca(OH)₂ enthaltender Kalkmilch neutralisiert.
Von der entstehenden Suspension wurden 50 g entnommen, mit 250 g Zement vermischt und zu einem Würfel geformt. Nach 7 Tagen war die Masse zu einem festen Formstein aus Beton ausgehärtet. Der Formstein konnte dann gefahrlos als schwach radioaktiver Abfall entsorgt werden.

## Patentansprüche

1. Verfahren zur Entsorgung von radioaktiv kontaminiertem Asbest, dadurch gekennzeichnet, daß man den radioaktiv kontaminierten Asbest mit einer anorganischen Fluor enthaltenden Säure oder einem sauren Alkali- oder Ammoniumsalz einer solchen Säure zersetzt und das Zersetzungsprodukt deponiert.

2. Verfahren nach Anspruch 1, dadurch gekennzeichnet, daß man eine wäßrige Lösung einer anorganischen Fluor enthaltenden Säure oder eines Alkali- oder Ammoniumsalzes einer solchen Säure verwendet.

3. Verfahren nach Anspruch 2, dadurch gekennzeichnet, daß die wäßrige Lösung 5 bis 40 Gew.-% der Säure oder des Salzes enthält.

4. Verfahren nach Anspruch 2 oder 3, dadurch gekennzeichnet, daß man eine wäßrige Lösung von Flußsäure, Hexafluorokieselsäure, Tetrafluoroborsäure oder Gemische aus zweien oder allen drei Säuren verwendet.

5. Verfahren nach einem der vorhergehenden Ansprüche, dadurch gekennzeichnet, daß man das Zersetzungsprodukt verfestigt.
